# EUROPEAN PATENT APPLICATION

(11) **EP 2 914 010 A1**
(43) Date of publication of application: **02.09.2015**
(21) Application number: 13848161.9
(22) Date of filing: 26.08.2013
(51) Int. Cl.: H04N 21/27

(54) **CONTENT SWITCHING METHOD AND APPARATUS**

(30) Priority: 25.10.2012 CN 201210411670
(71) Applicant: ZTE Corporation, Shenzhen, Guangdong 518057 (CN)
(72) Inventor: MIAO, Chuanyang, Shenzhen Guangdong Province 518057 (CN)
(74) Representative: Novagraaf Technologies
(86) International application number: PCT/CN2013/082308
(87) International publication number: WO 2014/063528

(57) **Abstract**

Provided are a content switching method and device. The method includes: acquired media content data is uploaded to a server (S102); and media playing resource information, which is corresponded to the media content data and found by the server according to the media content data, is received (S104). The present invention solves the problem existing in the related technology when content switching is performed, and brings the beneficial effect that content switching can be performed between terminals without need of association and communication.

## Description

### Technical Field

The present invention relates to the field of communications, including e.g., a content switching method and device.

### Background

With the development of the modern science and technology, and the increasing improvement of the terminal technology, the processing capabilities of various types of terminals are enough to support playing of high-definition and standard-definition audio-video contents in various coded formats, wherein such terminal can be a smart phone, a Personal Digital Assistant (PDA), a handheld computer and so on. Besides, a handheld terminal is usually equipped with a camera. Some usual video programs can be played on different terminals according to multimedia transmission technology based on the Internet Protocol (IP); in summary, the media can be played on the different terminals according to the Internet Protocol Television (IPTV) based on the IP transmission technology.

In related multi-screen fusion technologies, such as a Digital Living Network Alliance (DLNA), service platform fusion and user account fusion, consumptions of multi-screen media services on different devices can already be supported, and service continuity can be achieved. For example, a user can watch a live show on a device A, and then switch to a device B to continue watching.

However, such switching operation needs some preconditions, namely the device A and the device B must be associated to a certain extent in advance, for example, operators are required to associate the device A and the device B together logically. Secondly, in the process of switching operation, the device A needs to inform a server or the device B of a mark of a content being played on the device A, e.g., an Identity (ID) of the content, so that the switching operation can be initiated, even the device A directly sends media stream data to the device B.

Thus, in the absence of the preconditions, the user cannot switch media on different devices. For example, the user wants to watch on the device B the content played on the device A, but does not know the name of the content played on the device A, or the device A and the device B are not associated, and cannot communicate with each other. In this case, the user cannot initiate a content switching request.

Aiming at the problem existing in the related art when the content switching operation is performed between the terminals, an efficient solution has not been presented.

### Summary

A content switching method and device are provided in the embodiment of the present invention, at least to solve the above problem.

According to one aspect of the present invention, a content switching method is provided, comprising: uploading acquired media content data to a server; and receiving media playing resource information corresponding to the media content data, wherein the media playing resource information is found by the server according to the media content data.

According to an embodiment of the present invention, uploading the acquired media content data to the server comprises: capturing media contents being played on other terminals to obtain the media content data, or selecting pictures taken in advance, and/or video data or audio data recorded in advance as the media content data; and uploading the media content data to the server.

According to an embodiment of the present invention, after receiving media playing resource information corresponding to the media content data, wherein the media playing resource information is found by the server according to the media content data, the method further comprises: sending a playing request to the server according to the media playing resource information, wherein the playing request carries playing progress information; and playing corresponding media streams returned by the server according to the playing progress information.

According to an embodiment of the present invention, after uploading the acquired media content data to the server, the method further comprises: sending additional information to the server, wherein the additional information comprises at least one of the followings: terminal attribute information, terminal location information, attached information of the media content data, and an Identity, ID, for generating a bookmark.

According to an embodiment of the present invention, the media playing resource information comprises at least one of the followings: a media content storage address, a media playing server address, a Content Delivery Network, CDN, edge server address and a CDN management server address.

According to another aspect of the present invention, a content switching method, comprising: receiving media content data uploaded by a terminal; finding a media content Identity, ID, corresponding to the media content data from a media content data source according to the media content data; and finding corresponding media playing resource information according to the media content ID, and sending the found media playing resource information to the terminal.

According to an embodiment of the present invention, finding the corresponding media playing resource information according to the media content ID comprises: when there are multiple pieces of media playing resource information, selecting the corresponding media playing resource information according to terminal attribute information and/or terminal location information sent by the terminal.

According to an embodiment of the present invention, before sending the found media playing resource information to the terminal, the method further comprises: generating bookmark information according to the media playing resource information.

According to an embodiment of the present invention, generating the bookmark information according to the media playing resource information comprises: when an ID for generating a bookmark sent by the terminal is received, generating the bookmark information of the terminal according to the media playing resource information; or based on that terminal attribute information sent by the terminal is received, judging whether the terminal is able to support media corresponding to the media playing resource information according to the terminal attribute information; when a judgment result is that the terminal is not able to support the media corresponding to the media playing resource information, generating the bookmark information of the terminal.

According to an embodiment of the present invention, the media playing resource information comprises at least one of the followings: a media content storage address, a media playing server address, a Content Delivery Network, CDN, edge server address and a CDN management server address.

According to an aspect of the present invention, a content switching device, comprising: a multi-screen switching control component, configured to upload acquired media content data to a server; and a receiving component, configured to receive media playing resource information corresponding to the media content data, wherein the media playing resource information is found by the server according to the media content data.

According to an embodiment of the present invention, the device further comprises: an audio and video capturing component, configured to capture media contents being played on other terminals to obtain the media content data.

According to an embodiment of the present invention, the device further comprises: a playing component, configured to send a playing request which carries playing progress information to the server according to the media playing resource information, and play corresponding media streams returned by the server according to the playing progress information.

According to an embodiment of the present invention, the multi-screen switching control component is further configured to send additional information to the server, wherein the additional information comprises at least one of the followings: terminal attribute information, terminal location information, attached information of the media content data, and an Identity, ID, for generating a bookmark.

According to another embodiment of the present invention, a content switching device, comprising: a content receiving component, configured to receive media content data uploaded by a terminal; a media analyzing component, configured to find a media content Identity, ID, corresponding to the media content data from a media content data source according to the media content data; and a content retrieving component, configured to find corresponding media playing resource information according to the media content ID, and send the found media playing resource information to the terminal.

According to an embodiment of the present invention, when there are multiple pieces of the found media playing resource information, the content retrieving component is further configured to select the corresponding media playing resource information according to terminal attribute information and/or terminal location information sent by the terminal.

According to an embodiment of the present invention, the device further comprises: a bookmark generating component, configured to generate bookmark information according to the media playing resource information.

According to an embodiment of the present invention, the bookmark generating component is further configured to, based on that an ID for generating a bookmark sent by the terminal is received, generate the bookmark information of the terminal according to the media playing resource information; or, the bookmark generating component is further configured to, based on that terminal attribute information sent by the terminal is received, judge whether the terminal is able to support media corresponding to the media playing resource information according to the terminal attribute information, and when a judgment result is that the terminal is not able to support the media corresponding to the media playing resource information according to the terminal attribute information, generate the bookmark information of the terminal.

By the embodiment of the present invention, the acquired media content data is uploaded to the server, and the media playing resource information corresponding to the media content data is received, wherein the media playing resource information is found by the server according to the media content data. It is solved the problem existing in the related art when content switching is performed between the terminals, and it brings the beneficial effect that content switching can be performed between terminals without need of association and communication.

### Brief Description of the Drawings

The accompanying drawings described here are used for providing a deeper understanding of the present invention, and constitute a part of the application; schematic embodiments of the present invention and description thereof are used for illustrating the present invention and not intended to form improper limit to the present invention. In the accompanying drawings:
Fig. 1 is a flowchart 1 of a content switching method according to an embodiment of the present invention;
Fig. 2 is a flowchart 2 of a content switching method according to an embodiment of the present invention;
Fig. 3 is a structural diagram 1 of a content switching device according to an embodiment of the present invention;
Fig. 4 is a structural diagram 2 of a content switching device according to an embodiment of the present invention;
Fig. 5 is a flowchart 1 of a content switching method according to an optional embodiment of the present invention;
Fig. 6 is a flowchart 2 of a content switching method provided according to an optional embodiment of the present invention;
Fig. 7 is a flowchart 3 of a multi-screen switching method according to an optional embodiment of the present invention;
Fig. 8 is a flowchart of a multi-screen bookmark generating method according to an optional embodiment of the present invention;
Fig. 9 is a flowchart 4 of a content switching method according to an optional embodiment of the present invention; and
Fig. 10 is a structural diagram of a content switching system according to an optional embodiment of the present invention.

### Detailed Description of the Embodiments

The present invention is elaborated below with reference to the accompanying drawings and embodiments. Note that, embodiments and features in embodiments in the application can be combined with each other on condition of not conflicting.

### Embodiment 1

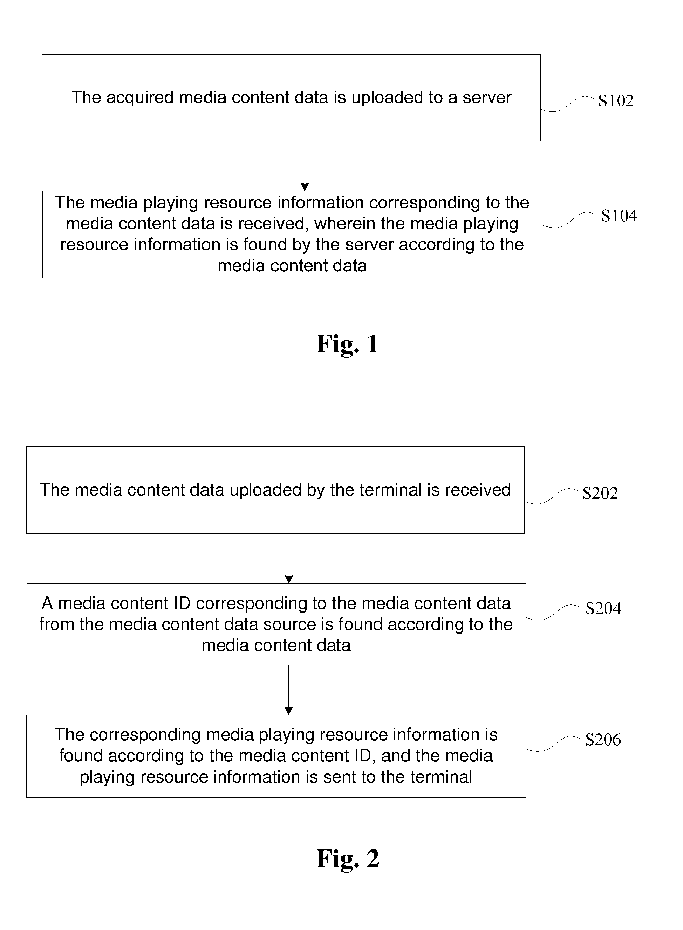

A content switching method is provided in the embodiment of the present invention; Fig. 1 is a flowchart 1 of a content switching method according to an embodiment of the present invention; as shown in Fig. 1, the flow includes the following steps:
Step 102: the acquired media content data is uploaded to the server; and
Step 104: the media playing resource information corresponding to the media content data is received, wherein the media playing resource information is found by the server according to the media content data.

Through the above steps, the method in the related art that the terminals need to associate and communicate when performing switching is changed, and it is solved the problem in the related art that the content switching operation cannot be performed when the terminals do not associate or communicate, then the beneficial effect that the content switching operation can be performed between terminals without need of association and communication is achieved.

There are various ways for acquiring the media content data; in an optional manner, the media contents being played on other terminals can be captured to obtain the media content data; or the pictures taken in advance, and/or the video data or audio data recorded in advance are selected as the media content data. Through the above steps, the terminal can acquire the media contents being played on other terminals in real time, and then implement switching the contents from other terminals to the terminal.

After the media playing resource information is received, the terminal may have several processing methods; for example, the terminal makes a request for downloading a complete media file corresponding to the address; the terminal can also make a request for playing the complete media file on demand; in an optional manner, the terminal can send a playing request to the server according to the media playing resource information, wherein the playing request carries the playing progress information; and then the playing server returns the media streams according to the playing progress information. Through the above steps, the terminal can achieve a complete synchronization effect when performing switching.

After the acquired media content data is uploaded to the server, a lot of information can further be sent to the server; in an optional manner, an additional information can further be sent to the server, wherein the additional information includes at least one of the followings: the terminal attribute information, the terminal location information, the attached information of the media content data, and the ID for generating a bookmark. Through the above steps, it is possible for the server to find the media playing resource information which is more suitable for the terminal, or it is possible for the server to generate the bookmark information.

The media playing resource information may include a lot of information; in an optional manner, the media playing resource information may include at least one of the followings: the media content storage address, the media playing server address, the CDN edge server address and the CDN management server address.

### Embodiment 2

A content switching method is further provided in the embodiment of the present invention; Fig. 2 is a flowchart 2 of a content switching method according to an embodiment of the present invention; as shown in Fig. 2, the flow includes the following steps:
Step 202: the media content data uploaded by the terminal is received;
Step 204: the media content ID corresponding to the media content data from the media content data source is found according to the media content data; and
Step 206: the corresponding media playing resource information is found according to the media content ID, and the media playing resource information is sent to the terminal.

In an optional manner, under the condition that there are multiple pieces of searched media playing resource information, the corresponding media playing resource information is selected according to the terminal attribute information and/or the terminal location information sent by the terminal.

In an optional manner, before the found media playing resource information is sent to the terminal, the method further includes: the bookmark information is generated according to the media playing resource information.

In an optional manner, generating the bookmark information according to the media playing resource information includes: under the condition that the ID for generating a bookmark sent by the terminal is received, the bookmark information of the terminal is generated according to the media playing resource information; or, under the condition that the terminal attribute information sent by the terminal is received, it is judged whether the terminal is able to support the media corresponding to the media playing resource information according to the terminal attribute information; and when the judgment result is that the terminal is not able to support the media corresponding to the media playing resource information according to the terminal attribute information, then the bookmark information of the terminal is generated.

### Embodiment 3

A content switching device is provided in the embodiment of the present invention; the device is applied to implement the above embodiments and optional implementation modes; the embodiments and optional implementation modes which have been described will not be repeated. For example, a terminology "component" used below can realize a combination of software and/or hardware with predetermined functions. Although the device described in the following embodiment is realized by software preferably, it is possible to realize and conceive hardware or the combination of software and hardware.

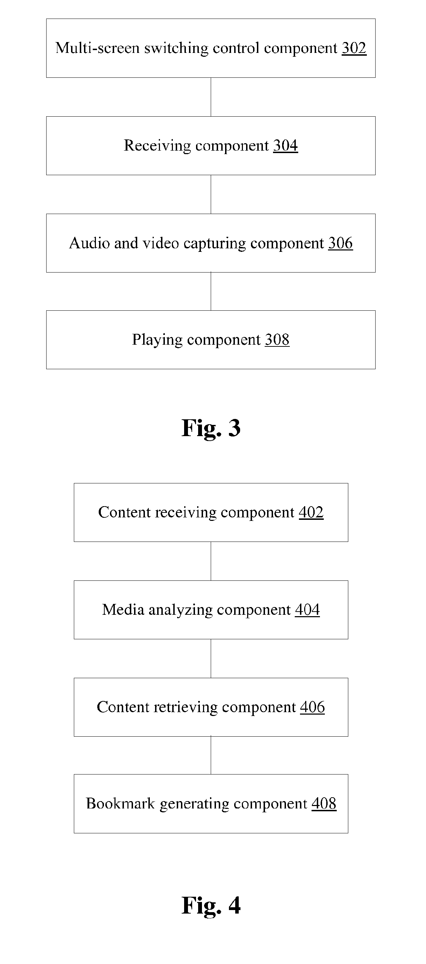

Fig. 3 is a structural diagram 1 of a content switching device according to an embodiment of the present invention; as shown in Fig. 3, the device includes a multi-screen switching control component 302 and a receiving component 304;
the multi-screen switching control component 302 is configured to upload acquired media content data to a server; and
the receiving component 304 is configured to receive media playing resource information corresponding to the media content data, wherein the media playing resource information is found by the server according to the media content data.

In an optional manner, the device further includes an audio and video capturing component 306, which is configured to capture media contents being played on other terminals to obtain the media content data.

In an optional manner, the device further includes a playing component 308, which is configured to send a playing request which carries playing progress information to the server according to the media playing resource information, and play corresponding media streams returned by the server according to the playing progress information.

In an optional manner, the multi-screen switching control component 302 is further configured to send additional information to the server, wherein the additional information includes at least one of the followings: terminal attribute information, the terminal location information, attached information of the media content data, and an ID for generating a bookmark.

In the optional implementation modes in the embodiment of the present invention, all the components of the device can be combined with each other according to the method described in the embodiment 1 to complete corresponding functions, and have the same beneficial effect, which will not be repeated in the present invention.

### Embodiment 4

A content switching device is further provided in the embodiment of the present invention; the device is applied to implement the above embodiments and optional implementation modes; the embodiments and optional implementation modes which have been described will not be repeated. For example, a terminology "component" used below can realize a combination of software and/or hardware with predetermined functions. Although the device described in the following embodiment is realized by software preferably, it is possible to realize and conceive hardware or the combination of software and hardware.

Fig. 4 is a structural diagram 2 of a content switching device according to an embodiment of the present invention; as shown in Fig. 4, the device includes a content receiving component 402, a media analyzing component 404 and a content retrieving component 406;
the content receiving component 402 is configured to receive media content data uploaded by the terminal;
the media analyzing component 404 is configured to find a media content ID corresponding to the media content data from the media content data source according to the media content data; and
the content retrieving component 406 is configured to find corresponding media playing resource information according to the media content ID, and send the found media playing resource information to the terminal.

In an optional manner, when there are multiple pieces of the found media playing resource information, the content retrieving component 406 is further configured to select the corresponding media playing resource information according to the terminal attribute information and/or the terminal location information sent by the terminal.

In an optional manner, the device further includes a bookmark generating component 408, which is configured to generate bookmark information according to the media playing resource information.

In an optional manner, the bookmark generating component 408 is further configured to, under the condition that the ID for generating a bookmark sent by the terminal is received, generate bookmark information of the terminal according to the media playing resource information; or, the bookmark generating component is further configured to, under the condition that terminal attribute information sent by the terminal is received, judge whether the terminal is able to support the media corresponding to the media playing resource information according to the terminal attribute information, and when the judgment result is that the terminal is not able to support the media corresponding to the media playing resource information according to the terminal attribute information, then generate the bookmark information of the terminal.

In the optional implementation modes of the embodiment of the present invention, all the components of the device can be combined with each other according to the method described in the embodiment 2 to complete corresponding functions, and have the same beneficial effect, which will not be repeated in the present invention.

### Embodiment 5

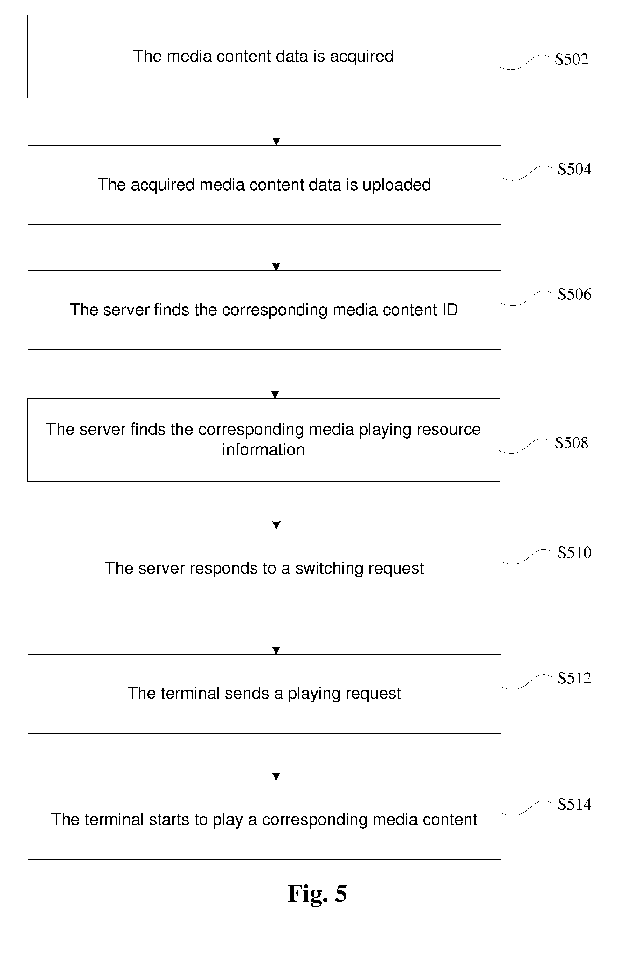

Fig. 5 is a flowchart 1 of a content switching method according to an optional embodiment of the present invention; as shown in Fig. 5, the flow includes the following steps.

Step 502: The media content data is acquired.

The user starts the audio and video capturing component of the terminal, such as the camera of the terminal. A multimedia capturing area of the camera is aligned to a screen of the other terminal, and captures the media content data, namely takes pictures after the audio and video capturing area focuses on the screen of the other terminal. Or, the user can directly select the pictures taken before or other media contents. Here, the acquired media content data can be either the original data or the processed data.

Step 504: The acquired media content data is uploaded.

The terminal uploads the acquired media content data to the server and initiates a switching request.

Step 506: The server finds the corresponding media content ID.

The server compares the media content data with the existing data in the media content data source to extract the media content ID correspond to the media content data, such as a media file ID.

Step 508: The server finds the corresponding media playing resource information.

The server finds, in the server, the related content of the media file according to the media content ID, and finds the server address which can support playing the contents, namely the media playing resource information.

Step 510: The server responds to the switching request.

The server responds to the switching request, and returns the media playing resource information to the terminal.

Step 512: The terminal sends the playing request.

The terminal sends the playing request to the server.

Step 514: The terminal starts to play the corresponding media content.

The terminal receives the media stream sent by the server, and starts to play the corresponding media content.

### Embodiment 6

In the content switching method provided in the embodiment of the present invention, the terminal hoping to perform the media switching operation or making a media request needs to capture the media content data being played on the screen of another terminal through the audio and video capturing component, and the media content data needs to be uploaded to the server. The server extracts some elements which can perform mark identification, such as a logo of a live channel, a name of TV series, and even a complete TV picture, by related media analyzing programs, such as image analyzing and comparing software and video searching software. And then, the corresponding media content ID in a database, and other applications and attached contents associated with the program can be found by analyzing and extracting these ID.

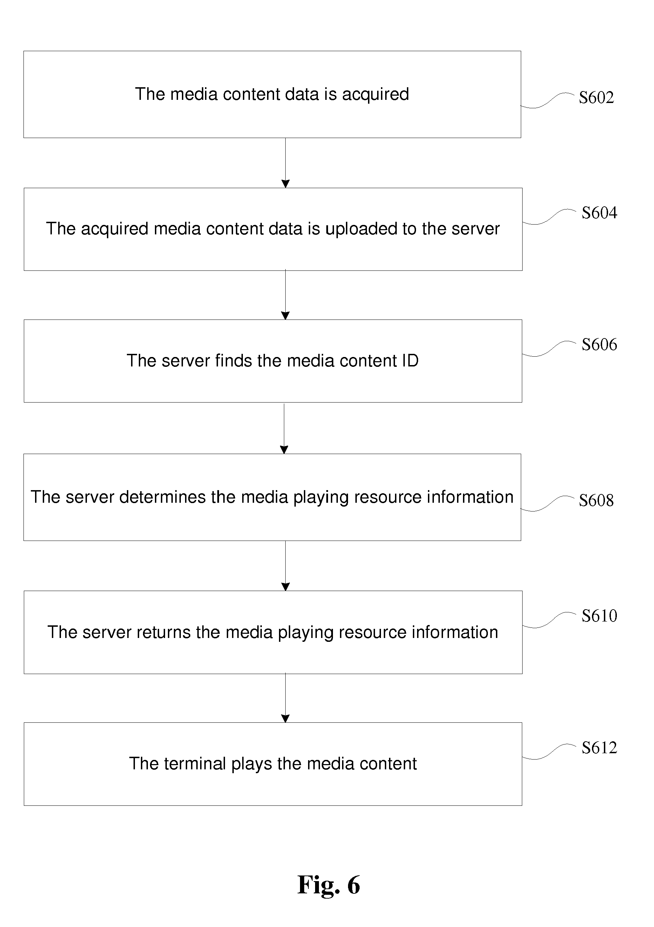

Fig. 6 is a flowchart 2 of a content switching method provided according to an optional embodiment of the present invention; as shown in Fig. 6, the flow includes the following steps.

Step 602: The media content data is acquired.

The user starts the audio and video capturing component on the terminal A, such as the camera, and an IPTV client, wherein the IPTV client connects with an IPTV service platform of the server, and passes user authentication and other authentication programs.

The user aligns the multimedia capturing area of the camera to the screen of the terminal B, and captures the media content data on the screen of the terminal B after the audio and video capturing area focuses on the screen of the terminal B, wherein the way of capturing the media content data can be taking pictures. Or, the user can directly select the pictures taken before or other media contents, such as a bookmark mode. Here, the terminal A can also perform further processing to the acquired media content data to generate the processed media content data.

In an optional manner, the terminal A performing content switching can support network connection and preset the IPTV client, wherein the IPTV client can support call for the audio and video capturing component, such as the camera, through an Application Programming Interface (API).

In an optional manner, when the terminal A calls the camera, a media capturing window can be set, whose size is changeable; the maximum size should be able to support full-screen capturing. The camera takes pictures, records videos and even records audio of images covering on the capturing window, and then stores the acquired media content data in a hard disc or a buffer of the terminal A. When the user hopes to perform content switching later, the user can directly call the media content data stored on the hard disc.

In an optional manner, the terminal A can also be equipped with a data processing component; the data processing component can process the acquired media content data, such as compressing the pictures and comparing the pattern; the data processing component can also process the acquired media content data to acquire the simplified media content data.

Step 604: The acquired media content data is uploaded to the server.

The terminal A uploads the acquired media content data to the server, and initiates a switching request or indicates the server to save the media content data as the bookmark information.

In an optional manner, when the user hopes to perform content switching in time, the switching request can further be sent to the server by the IPTV client. The switching request can carry the acquired media content data.

In an optional manner, when the user hopes to perform content switching later, the user can further select the media content data acquired and stored before, and then uploads the media content data to the server. The reason that there is the situation of switching later is because the existing network connection is relatively poor.

In an optional manner, when the acquired media content data is the pictures taken, then the taken pictures can include the attached information of the media content data, such as size, resolution and time of taking pictures.

In an optional manner, when the media content data is uploaded, some attribute data of the terminal can further be uploaded, such as screen size, supported resolution and type of the terminal.

In an optional manner, when the terminal supports a locating function, information about the current location of the terminal can also be uploaded. Or, the information about the location is deduced through the information about an access point.

In an optional manner, when the user hopes to save a bookmark, the ID for generating a bookmark can also be sent.

Step 606: The server finds the media content ID.

The server compares the media content data with the existing data in the database to extract the corresponding media content ID according with the media content data, such as a main file ID. Besides, a playing capability attribute of the terminal A can be obtained by analyzing the attribute of the media content data; certainly, the terminal A can also upload some additional information, such as the terminal attribute information, the terminal location information, and the attached information of the media content data, while uploading the media content data; the server can obtain the playing capability attribute of the terminal A according to all or a part of the above additional information, and then selects the suitable media playing resource information according to the capability attribute of the terminal A. In addition, all the related contents can also be found in the server according to the media content ID, wherein all the related contents include attached contents related to the main content, such as advertisements, movie clips, video descriptions or address of the associated websites.

In an optional manner, the server receives a switching instruction sent by the terminal A, wherein the instruction carries the media content data; the server leaves the media content data to its media analyzing component to analyze and compare, so as to extract some elements which can perform mark identification, for example, converting a graph logo of channel into a text logo of channel. Generally, the media analyzing function can be implemented by professional graph analyzing and comparing software, which will not be repeated here.

In an optional manner, the server searches in a video database according to the elements which can perform mark identification to retrieve the corresponding media content ID in the system. For example, a channel ID of this channel and the corresponding multi-cast address in the database are retrieved according to the text logo of channel, and the attached information, such as the associated advertisements, applications, URL of web pages and so on can also be retrieved through the channel ID.

In an optional manner, the current playing progress can also be analyzed according to the time for acquiring the media content data, the playing progress can be used for determining a time point for program switching when the user watches continuously, and can also be converted into the bookmark information of the user.

In an optional manner, more accurate media playing resource information is further retrieved from the database through the additional information uploaded from the terminal, such as the terminal attribute information and the terminal location information; for example, when there are multiple program files with different code rates and resolutions, the media playing resource information which is more suitable for terminal capability and network can be selected through the above information.

Step 608: The server determines the media playing resource information.

The server searches, according to the found media content ID, the server address which can provide playing support, namely the address storing the media content actually, for example, the address of a certain CDN edge node storing the corresponding media content. When the user does not need to switch programs immediately, the address can also be converted into the bookmark and stored.

In an optional manner, when the user needs to switch in real time, the server finds the user the address storing the media content actually and provides the server address of the edge node storing the media content according to the media content ID obtained in Step 606.

In an optional manner, when the user does not need to switch in real time, the server leaves the media content ID and/or the media playing resource information to a bookmark server to process to generate a playing bookmark.

Step 610: The server returns the media playing resource information.

The server returns the media playing resource information to the terminal A. When the switching request of the user does not need to switch immediately, the server only responds a message for saving the bookmark successfully instead of returning the media playing resource information.

Step 612: The terminal plays the media content.

The terminal A initiates the playing request according to the media playing resource information. After the server receives the playing request, it sends the media streams to the terminal A, and then the terminal A starts to play media programs. When the data returned by the server further includes the attached content of the media content, the terminal A can also start another window to display the attached content.

In an optional manner, when the user does not mind pushed contents and forms, the server can start other video components to provide media; for example, it turns an IPTV live program into a Video On Demand (VOD) program, or enters a time shifting channel to provide a media content service.

### Embodiment 7

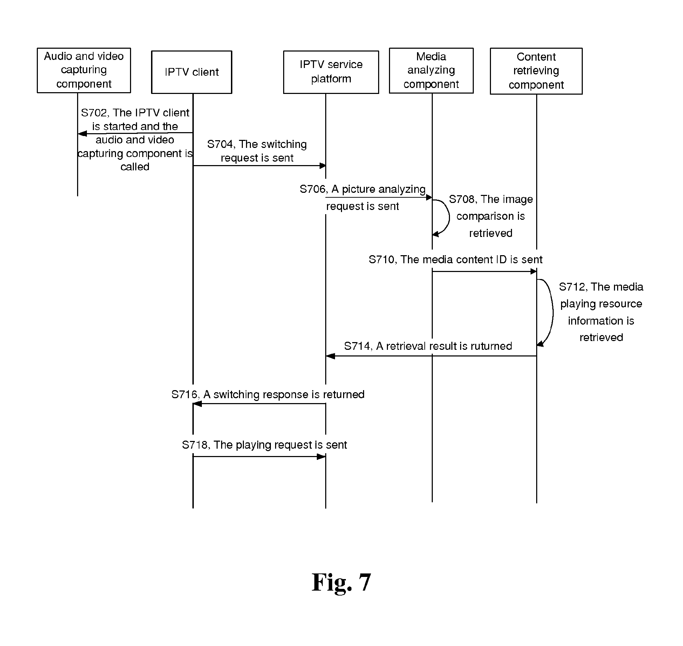

Fig. 7 is a flowchart 3 of a multi-screen switching method according to an optional embodiment of the present invention; the flow is completed by the terminal and the server together, wherein the terminal includes audio and video capturing component and IPTV client, and the IPTV client includes the multi-screen switching control component. The server includes the IPTV service platform, the media analyzing component and the content retrieving component. The flow takes a live show switching request process of an IPTV user for example; as shown in Fig. 7, the flow includes the following steps.

Step 702: The IPTV client is started and the audio and video capturing component is called.

The user starts the IPTV client on the terminal, and enters a live channel selecting page. The user selects to call the camera, and then the video capturing window appears on the screen. The user aligns the capturing window to the content of a target screen, and takes pictures after focusing, wherein taking pictures a LOGO area of the media content data can be focused, or the whole screen can be focused on when taking pictures.

Step 704: The terminal sends a switching request to the server.

The user selects an option of performing multi-screen switching in the IPTV client, and selects the pictures taken in Step 702 as the acquired media content data; the IPTV client sends the switching request to the IPTV service platform of the server, wherein the switching request message carries the acquired media content data.

When the terminal supports the image processing function, it can be selected to compress the images taken or perform image comparison, so as to obtain the content of an ID area in advance.

Meanwhile, the switching request message can carry the terminal attribute information of the user, such as type of the terminal, a supported resolution and the type of a used network.

Step 706: The IPTV service platform sends a picture analyzing request to the media analyzing component.

The IPTV service platform of the server receives the switching request message, and extracts picture information in the message, and transfers it to the media analyzing component of the server to process.

Step 708: The image comparison retrieval is performed.

The media analyzing component analyzes and compares the pictures, extracts some obvious logo pictures in the images and generates corresponding text information. When the obvious logo pictures therein cannot be extracted, image comparison is performed directly to retrieve a program name related to the pictures, wherein the program name is the text name. Then, the media content ID corresponding to the program name, such as the media content ID and the related attached content is further retrieved in the database according to the program name.

S710: The media content ID is sent.

The media content ID is delivered to the content retrieving component by the media identifying function, to request the content retrieving component to retrieve correspondingly.

Step 712: The media playing resource information is retrieved.

The content retrieving component finds in the CDN the media content storage address, namely a media content playing address, according to the media content ID retrieved in Step 708.

In an optional manner, the content retrieving component can further request to the IPTV service platform for the terminal attribute information and/or location information. Retrieval results are further screened to extract a more accurate media content playing address; for example, a media file address suitable for a playing size is selected for the terminal. Certainly, the terminal attribute information and/or location information can further be sent to the content retrieving component by the IPTV service platform directly through the media analyzing component.

Step 714: The content retrieving component returns the retrieval result to the IPTV service platform.

Step 716: The IPTV service platform returns a switching response.

The IPTV service platform generates a switching request response message, wherein the response message carries the retrieval result, such as the media content ID, the media playing resource information and an applicable attached resource address.

Step 718: The playing request is sent.

The IPTV client sends the playing request according to the media playing resource information.

### Embodiment 8

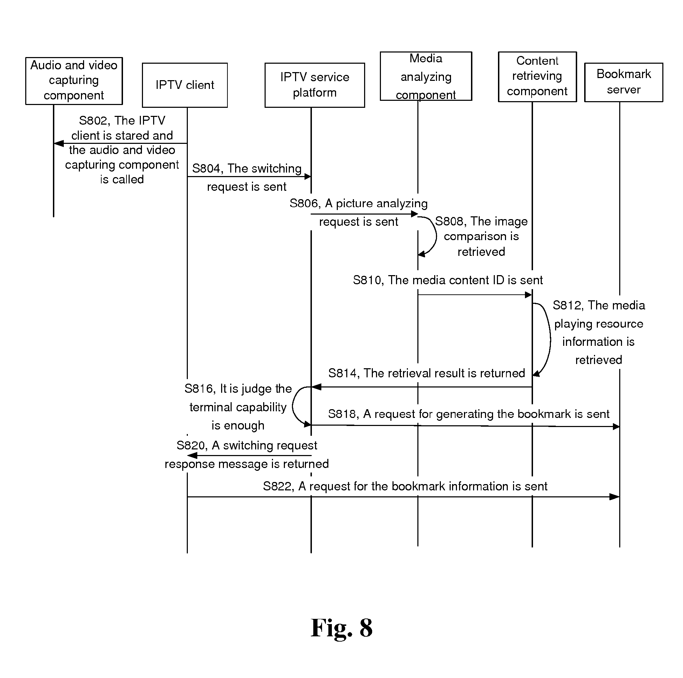

Fig. 8 is a flowchart of a method for generating multi-screen bookmark according to an optional embodiment of the present invention; the flow is completed by the terminal and the server together, wherein the terminal includes audio and video capturing component and IPTV client, and the IPTV client includes the multi-screen switching control component. The server includes the IPTV service platform, the media analyzing component, the content retrieving component and the bookmark server. As shown in Fig. 8, the flow includes the following steps.

Step 802: The IPTV client is stared and the audio and video capturing component is called.

The user starts the IPTV client on the terminal, and enters the live channel selecting page. The user selects to call the camera, and then the video capturing window appears on the screen. The user aligns the capturing window to the content of the target screen, and takes pictures after focusing, wherein the LOGO area of the media content data can be focused on or the whole screen can be focused on when taking pictures.

Step 804: The terminal sends the switching request to the server.

The user selects the option of performing multi-screen switching, and selects the pictures taken in Step 802; the terminal sends the switching request to the server, wherein the request message carries the captured pictures and an ID for generating a multi-screen bookmark. The request message can further carry the uploaded terminal attribute information, including the type of the terminal, the supported resolution, the type of the used network and so on.

Step 806: The IPTV service platform sends the picture analyzing request to the media analyzing component.

The IPTV service platform of the server receives the switching request message, and then extracts the picture information in the message, and transfers it to the media analyzing component of the server to process.

Step 808: Image comparison retrieval is performed.

The media analyzing component analyzes and compares the pictures, extracts some obvious logo pictures in the images and generates the corresponding text information. When the obvious logo pictures therein cannot be extracted, then image comparison is performed directly to retrieve the program name related to the pictures, wherein the program name is the text name. Then, the media content ID corresponding to the program name, such as the media content ID and the related attached content is further retrieved in the database according to the program name.

Step 810: The media content ID is sent.

The media content ID is delivered to the content retrieving component by the media identifying function, to request the content retrieving component to retrieve correspondingly.

Step 812: The media playing resource information is retrieved.

The content retrieving component finds in the CDN the media content storage address, namely the media content playing address, according to the media content ID retrieved in Step 808.

In an optional manner, the content retrieving component can further request to the IPTV service platform for the terminal attribute information and/or location information. Retrieval results are further screened to extract the more accurate media content playing address; for example, the media file address suitable for the playing size is selected for the terminal. Certainly, the terminal attribute information and/or location information can further be sent to the content retrieving component by the IPTV service platform directly through the media analyzing component.

Step 814: The content retrieving component returns the retrieval result to the IPTV service platform.

Step 816: It is judged whether the terminal capability is enough.

When there is the ID for generating a bookmark in the switching request, then the media playing resource information is delivered to the bookmark server to process, so as to generate the bookmark. Suppose that there is no the ID for generating a bookmark in the switching request, the server can also judge, according to the terminal attribute carried in the switching request, whether the terminal can match with the corresponding code rate of the media content, namely whether the terminal capability is enough. When the terminal cannot match with the media content, namely it cannot play the media content, the media playing resource information is automatically delivered to the bookmark server to save as the bookmark. The server can further deduce, according to the time for capturing the media content data, a requested starting time point of the program that the user hopes to switch and saves it in the bookmark information.

Step 818: It is requested to generate a bookmark.

The IPTV service platform of the server delivers the retrieval result to the bookmark server to process, so as to generate the bookmark information.

Step 820: The switching request response message is returned.

The IPTV service platform of the server generates the switching request response message, wherein the switching request response message carry the information indicating that the bookmark is generated successfully.

Step 822: The terminal requests for the bookmark information.

The IPTV client of the terminal requests for the bookmark information; subsequently, a flow of requesting for the media stream can be started according to the information in the bookmark. At this point, the requesting terminal can be either a user terminal acquiring the media content data or other associated terminals of the user.

### Embodiment 9

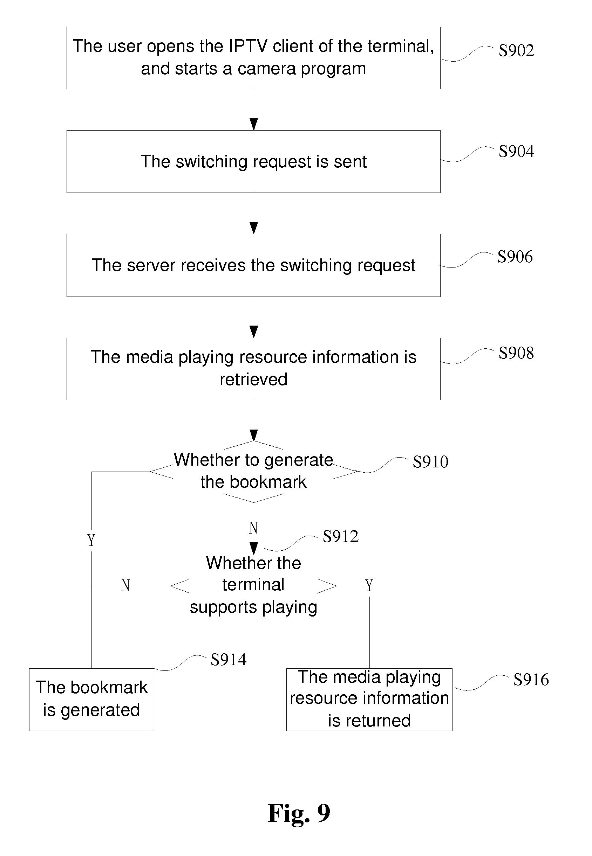

Fig. 9 is a flowchart 4 of a content switching method according to an optional embodiment of the present invention. The system implementing the flow includes terminal and server, wherein the terminal includes the IPTV client, and the server includes the IPTV service platform, the media analyzing component, the content retrieving component and the bookmark server. As shown in Fig. 9, the flow includes the following steps.

Step 902: The user opens the IPTV client of the terminal, and starts a camera program.

Step 904: The switching request is sent.

The IPTV client sends the switching request, and carries the acquired media content data in the request; meanwhile, the request can further carry the terminal attribute information.

Step 906: The server receives the switching request.

The IPTV service platform of the server receives the switching request, transfers the media content data carried in the request to the media analyzing component to process. The media analyzing component retrieves the media content ID according to the media content data, and forwards the media content ID to the content retrieving component.

Step 908: The media playing resource information is retrieved.

The content retrieving component retrieves the corresponding media playing resource information according to the media content ID, and forwards the media playing resource information to the server.

Step 910: It is judged whether to generate a bookmark.

The server firstly judges whether the switching request carries the ID of generating a bookmark; when the switching request carries the ID of generating a bookmark, Step 914 is executed; otherwise, Step 912 is executed.

Step 912: It is judged whether the terminal supports playing.

The server judges whether the terminal can support playing the media content corresponding to the media playing resource information according to the terminal attribute information carried in the switching request; when the terminal cannot support playing the media content corresponding to the media playing resource information, namely it cannot play the media content, Step 914 is executed; otherwise, Step 916 is executed.

Step 914: The bookmark is generated.

The server sends a bookmark generating request to the bookmark server; and then the bookmark server generates the bookmark.

Step 916: The media playing resource information is returned.

### Embodiment 10

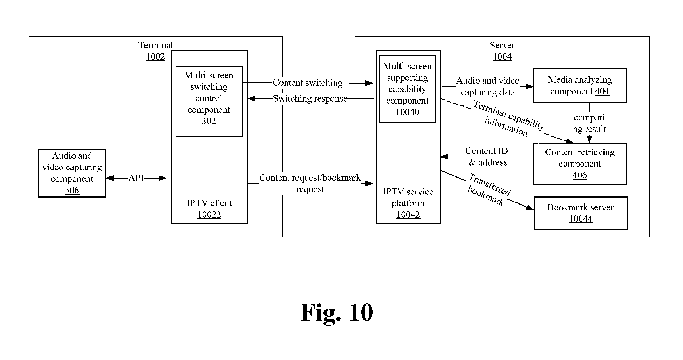

Fig. 10 is a structural diagram of a content switching system according to an optional embodiment of the present invention; the system completes the embodiment of the present invention by using the existing IPTV system architecture and enhancing some functions of it. As shown in Fig. 10, the system includes: the terminal 1002 and the server 1004.

The terminal 1002 includes the audio and video capturing component 306 and the IPTV client 10022, wherein the IPTV client 10022 includes the multi-screen switching control component 302. The IPTV client 10022 is equivalent to the receiving component 304 and the playing component 308 in Fig. 3.

The audio and video capturing component 306 takes charge of capturing external images, and it can include the camera or an audio input device.

The IPTV client 10022 takes charge of associating with the IPTV service platform 10042, and it is used for processing selection of the media content made by the user and parsing the media playing resource information returned by a parsing server 1004, and controlling playing of a media player, including establishment of media link, establishment of control session, and so on.

The multi-screen switching control component 302 is configured to send the switching request to the IPTV service platform 10042, and take charge of uploading the acquired media content data and optionally uploading the additional information to the server, wherein the additional information includes the terminal attribute information, such as the type of the terminal, a memory, the buffer, the supported resolution and the type of network which can support access, the terminal location information and additional attributes of the media content data, such as size, resolution and time of taking pictures.

The server 1004 includes the IPTV service platform 10042, the media analyzing component 404, the content retrieving component 406 and the bookmark server 10044, wherein the IPTV service platform 10042 includes a multi-screen supporting capability component 10040. The IPTV service platform 10042 is equivalent to the content receiving component 402 in Fig. 4, and the bookmark server 10044 is equivalent to the bookmark generating component 408 in Fig. 4.

The IPTV service platform 10042 processes the common IPTV service request, completes response to the IPTV client 10022, and provides a basic IPTV service capability.

The multi-screen supporting capability component 10040 takes charge of processing the switching request sent from the IPTV client 10022, guiding the IPTV service platform 10042 to complete analysis and retrieval to the acquired media content data, and feeding back the retrieval result.

The media analyzing component 404 takes charge of performing content extraction on the acquired media content data and forming text parameters, for example, performing image retrieval and text conversion, and then retrieving in the database according to the text parameters to obtain the media content ID and other attached content information associated with the media content ID.

The content retrieving component 406 takes charge of combining the media content ID retrieved by the media analyzing component 404 with the attribute information of the terminal 1002 to further directly retrieve for the user the media content playing address and the edge server address, namely the server address which can provide services, wherein the media content playing address and the edge server address are suitable for the terminal attribute.

The bookmark server 10044 is used for saving the retrieved information as the bookmark when the user does not need to perform switching temporarily or the current condition is not enough to support switching. The bookmark can enable the user to perform media content switching as well when logging in from any other device.

It can be seen from the above description that the present invention achieves the following technical effect: the content switching can be performed between the terminals without need of association and communication.

Obviously, the skilled personnel in the field should appreciate that the above components and steps of the present invention can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device; in addition, under some conditions, the presented or described steps can be executed in an order different from that described here; or they are made into integrated circuit components, respectively; or multiple components and steps of them are made into a single integrated circuit component to realize. In this way, the present invention is not limited to any particular combination of hardware and software.

The above is only the preferred embodiment of the present invention and not intended to limit the present invention; for the skilled personnel in the field, the present invention may have various modifications and changes. Any modifications, equivalent replacements, improvements and the like within the spirit and principle of the present invention shall fall within the scope of the claims of the present invention.

### Industrial applicability

The technical solutions provided by the embodiment of the present invention can be applied to the technical field of multimedia transmission. It is solved the problem that the user cannot perform media switching on different devices, and the content switching between the terminals is achieved without need of association and communication.

## Claims

1. A content switching method, **characterized by** comprising:
uploading acquired media content data to a server; and
receiving media playing resource information corresponding to the media content data, wherein the media playing resource information is found by the server according to the media content data.

2. The method according to claim 1, **characterized in that** uploading the acquired media content data to the server comprises:
capturing media contents being played on other terminals to obtain the media content data, or selecting pictures taken in advance, and/or video data or audio data recorded in advance as the media content data; and
uploading the media content data to the server.

3. The method according to claim 1 or 2, **characterized in that** after receiving media playing resource information corresponding to the media content data, wherein the media playing resource information is found by the server according to the media content data, the method further comprises:
sending a playing request to the server according to the media playing resource information, wherein the playing request carries playing progress information; and
playing corresponding media streams returned by the server according to the playing progress information.

4. The method according to claim 3, **characterized in that** after uploading the acquired media content data to the server, the method further comprises:
sending additional information to the server, wherein the additional information comprises at least one of the followings: terminal attribute information, terminal location information, attached information of the media content data, and an Identity, ID, for generating a bookmark.

5. The method according to any one of claims 1 to 4, **characterized in that** the media playing resource information comprises at least one of the followings: a media content storage address, a media playing server address, a Content Delivery Network, CDN, edge server address and a CDN management server address.

6. A content switching method, **characterized by** comprising:
receiving media content data uploaded by a terminal;
finding a media content Identity, ID, corresponding to the media content data from a media content data source according to the media content data; and
finding corresponding media playing resource information according to the media content ID, and sending the found media playing resource information to the terminal.

7. The method according to claim 6, **characterized in that** finding the corresponding media playing resource information according to the media content ID comprises:
when there are multiple pieces of media playing resource information, selecting the corresponding media playing resource information according to terminal attribute information and/or terminal location information sent by the terminal.

8. The method according to claim 6 or 7, **characterized in that** before sending the found media playing resource information to the terminal, the method further comprises: generating bookmark information according to the media playing resource information.

9. The method according to claim 8, **characterized in that** generating the bookmark information according to the media playing resource information comprises:
when an ID for generating a bookmark sent by the terminal is received, generating the bookmark information of the terminal according to the media playing resource information; or
based on that terminal attribute information sent by the terminal is received, judging whether the terminal is able to support media corresponding to the media playing resource information according to the terminal attribute information; when a judgment result is that the terminal is not able to support the media corresponding to the media playing resource information, generating the bookmark information of the terminal.

10. The method according to any one of claims 6 to 9, **characterized in that** the media playing resource information comprises at least one of the followings: a media content storage address, a media playing server address, a Content Delivery Network, CDN, edge server address and a CDN management server address.

11. A content switching device, **characterized by** comprising:
a multi-screen switching control component, configured to upload acquired media content data to a server; and
a receiving component, configured to receive media playing resource information corresponding to the media content data, wherein the media playing resource information is found by the server according to the media content data.

12. The device according to claim 12, **characterized in that** the device further comprises:
an audio and video capturing component, configured to capture media contents being played on other terminals to obtain the media content data.

13. The device according to claim 11 or 12, **characterized in that** the device further comprises:
a playing component, configured to send a playing request which carries playing progress information to the server according to the media playing resource information, and play corresponding media streams returned by the server according to the playing progress information.

14. The device according to claim 13, **characterized in that** the multi-screen switching control component is further configured to send additional information to the server, wherein the additional information comprises at least one of the followings: terminal attribute information, terminal location information, attached information of the media content data, and an Identity, ID, for generating a bookmark.

15. A content switching device, **characterized by** comprising:
a content receiving component, configured to receive media content data uploaded by a terminal;
a media analyzing component, configured to find a media content Identity, ID, corresponding to the media content data from a media content data source according to the media content data; and
a content retrieving component, configured to find corresponding media playing resource information according to the media content ID, and send the found media playing resource information to the terminal.

16. The device according to claim 15, **characterized in that** when there are multiple pieces of the found media playing resource information, the content retrieving component is further configured to select the corresponding media playing resource information according to terminal attribute information and/or terminal location information sent by the terminal.

17. The device according to claim 15 or 16, **characterized in that** the device further comprises:
a bookmark generating component, configured to generate bookmark information according to the media playing resource information.

18. The device according to claim 17, **characterized in that** the bookmark generating component is further configured to, based on that an ID for generating a bookmark sent by the terminal is received, generate the bookmark information of the terminal according to the media playing resource information; or, the bookmark generating component is further configured to, based on that terminal attribute information sent by the terminal is received, judge whether the terminal is able to support media corresponding to the media playing resource information according to the terminal attribute information, and when a judgment result is that the terminal is not able to support the media corresponding to the media playing resource information according to the terminal attribute information, generate the bookmark information of the terminal.
